# EUROPÄISCHE PATENTSCHRIFT

(11) **EP 0 412 540 B1**
(45) Veröffentlichungstag und Bekanntmachung des Hinweises auf die Patenterteilung: **17.03.1993**
(21) Anmeldenummer: 90115307.2
(22) Anmeldetag: 09.08.1990
(51) Int. Cl.: F16D 65/09, F16D 65/56, F16D 51/18

(54) **Hydraulisch und mechanisch betätigbare Trommelbremse**
Hydraulically or mechanically activated drum brake
Frein à tambour à commande hydraulique ou mécanique

(30) Priorität: 10.08.1989 DE 8909618 U
(43) Veröffentlichungstag der Anmeldung: 13.02.1991
(73) Patentinhaber: LUCAS INDUSTRIES public limited company, Birmingham, B19 2XF West Midlands (GB)
(72) Erfinder: Varzescu, Victor, Dr., D-5400 Koblenz (DE)
(74) Vertreter: Goetz, Rupert, Dipl.-Ing.

(56) Entgegenhaltungen:
- DE-A- 3 021 794
- DE-B- 1 263 527
- US-A- 2 748 901

## Beschreibung

Die Erfindung betrifft eine hydraulisch und mechanisch betätigbare Trommelbremse, insbes. für Hinterräder eines Kraftfahrzeugs, mit
- einem hydraulischen Radbremszylinder, der an einer Ankerplatte befestigt ist und einen Kolben enthält,
- einem ersten Bremsbacken, der sich mit einem Ende am Radbremszylinder abstützt,
- einem zweiten Bremsbacken, der sich mit einem Ende am Kolben abstützt,
- einer Zwischenstütze, an der sich beide Bremsbacken mit ihren vom Radbremszylinder entfernten Enden abstützen, und
- einer mechanischen Betätigungsvorrichtung, mit der die Bremsbacken in der Nähe des Radbremszylinders auseinanderspreizbar sind,
- wobei der Radbremszylinder und die Zwischenstütze so angeordnet sind, daß bei hydraulischer Betätigung der Bremse in Vorwärtsfahrt beide Bremsbacken Ablaufbacken sind.

Bei einer bekannten Trommelbremse dieser Gattung (DE-A-3021794 ) ist die Zwischenstütze an der Ankerplatte derart pendelnd gelagert oder verschiebbar geführt, daß die an ihr abgestützten Enden der beiden Bremsbacken eine zum Radbremszylinder im wesentlichen parallele schwimmende Bewegung ausführen können. Wenn diese Bremse mechanisch betätigt wird, während das zugehörige Fahrzeug vorwärts fährt oder beispielsweise infolge eines Gefälles dazu neigt, vorwärtszurollen, nimmt die Bremstrommel den ersten Bremsbacken mit, so daß dessen normalerweise an einer geschlossenen Stirnseite des Radbremszylinders abgestütztes Ende sich vom Radbremszylinder entfernt und ihr anderes Ende über die schwimmende Zwischenstütze eine Umfangskraft auf das benachbarte Ende des zweiten Bremsbackens ausübt. Der zweite Bremsbacken wird durch diese Kraft sowie durch unmittelbar von der Bremstrommel auf ihn einwirkende Umfangskräfte gegen den Kolben des Radbremszylinders gedrückt, so daß dieser in den Radbremszylinder hinein verschoben wird und dabei solange Bremsflüssigkeit verdrängt, bis er an einem Anschlag im Radbremszylinder anliegt.

Die verdrängte Bremsflüssigkeit muß bei der nächsten hydraulischen Bremsbetätigung vom Hauptbremszylinder nachgeliefert werden. Dies erfordert einen Weg des Bremspedals, der größer ist als der übliche Pedalweg. In ungünstigen Fällen kann der zum Nachfüllen der Radbremszylinder beider Hinterradbremsen erforderliche Weg des Bremspedals größer sein als der größtmögliche Pedalweg, so daß eine ausreichende hydraulische Bremsung, wenn überhaupt, nur nach mehrmaligem Betätigen des Bremspedals möglich ist. Die bekannte Trommelbremse hat deshalb keine praktische Bedeutung erlangt, obwohl sie in an sich erwünschter Weise einen Bremsenkennwert hat, der bei hydraulischer Bremsung vergleichsweise klein ist und eine degressive Kennlinie hat, bei mechanischer Betätigung hingegen vergleichsweise groß ist und eine progressive Kennlinie hat.

Unter Bremsenkennwert versteht man das Verhältnis der Summe der auf die Bremsbacken beim Bremsen einwirkenden Umfangskräfte zur Spannkraft, mit der die Bremsbacken gegen die Bremstrommel gedrückt werden. Unter Kennlinie versteht man die Abhängigkeit des Bremsenkennwerts vom Reibungskoeffizienten der Paarung aus Bremsbelag und Bremstrommel.

Der Erfindung liegt die Aufgabe zugrunde, eine hydraulisch und mechanisch betätigbare Trommelbremse zu schaffen, die bei hydraulischer Betätigung eine degressive, bei mechanischer Betätigung aber eine progressive Kennline aufweist und die nachteilige Verdrängung von Bremsflüssigkeit aus dem Radbremszylinder bei mechanischer Betätigung vermeidet oder zumindest verringert.

Die Aufgabe ist erfindungsgemäß ausgehend von einer Trommelbremse der eingangs beschriebenen Gattung dadurch gelöst, daß
- die Zwischenstütze ein Gehäuse aufweist, das an der Ankerplatte befestigt ist und eine zum Radbremszylinder mindestens annähernd parallele Führung und einen Anschlag aufweist,
- in der Führung ein Nachstellglied begrenzt axial verschiebbar ist und
- ein Stößel, der mit einem seiner beiden Enden den ersten Bremsbacken abstützt und bei hydraulischer Betätigung der Bremse durch eine auf sein zweites Ende einwirkende Kraft in Richtung zum ersten Bremsbacken verschiebbar ist, in einer bezüglich dieser Kraft selbsthemmungsfreien, in entgegengesetzter Richtung jedoch selbsthemmenden Verbindung mit dem Nachstellglied steht.

Damit wird erreicht, daß hydraulische Bremsbetätigungskräfte unabhängig vom Abnutzungszustand der Reibbeläge der Bremsbacken im wesentlichen unbehindert vom zweiten Bremsbacken, der unmittelbar vom Kolben des Radbremszylinders betätigt wird, über die Zwischenstütze auf den ersten Bremsbacken übertragen werden, daß aber mechanische Bremsbetätigungskräfte sowie Umfangskräfte, die bei Vorwärtsfahrt von der Bremstrommel auf den ersten Bremsbacken einwirken, nicht auf den zweiten Bremsbacken übertragen werden. Wenn die Bremstrommel sich in Betriebsdrehrichtung dreht oder zu drehen bestrebt ist, verhält sich die erfindungsgemäße Zwischenstütze also bei hydraulischer Bremsbetätigung wie eine schwimmende Zwischenstütze, bei mechanischer Bremsbetätigung hingegen wie eine insgesamt starr befestigte Zwischenstütze.

Bei hydraulischer Betätigung hat die erfindungsgemäße Bremse bei sonst gleichen Verhältnissen die gleiche degressive Kennlinie wie die beschriebene bekannte gattungsgemäße Bremse; bei mechanischer Betätigung hat die erfindungsgemäße Bremse eine leicht progressive Kennlinie, die weniger stark ansteigt als die Kennlinie der bekannten Bremse bei mechanischer Betätigung. Die bei mechanischer Betätigung nur verhältnismäßig leicht progressive Kennlinie der erfindungsgemäßen Bremse ist erwünscht, da sie eine Überbremsung bei versehentlich mechanischer Betätigung in Vorwärtsfahrt verhindert. Bei Rückwärtsfahrt hat die erfindungsgemäße Bremse zwar ähnlich wie die beschriebene bekannte Bremse eine stärker progressive Kennlinie; dies ist aber unschädlich, da normalerweise nur mit geringen Geschwindigkeiten rückwärts gefahren wird und deshalb eine versehentliche Überbremsung in aller Regel keine Unfallgefahr hervorruft. Dies umso weniger, weil erfindungsgemäße Bremsen im allgemeinen nur bei Hinterrädern von Kraftfahrzeugen vorgesehen sind, die bei Rückwärtsfahrt sehr stark abgebremst werden können, ohne daß eine Schleudergefahr entsteht.

Die erfindungsgemäße, in einer Richtung selbsthemmungsfreie, in entgegengesetzter Richtung selbsthemmende Verbindung des Stößels mit dem Nachstellglied hat den zusätzlichen Vorteil, daß der erste Bremsbacken während der gesamten Lebensdauer seines Reibbelags bei mechanischer ebenso wie bei hydraulischer Bremsung daran gehindert wird, größere Bewegungen in Umfangsrichtung der Bremstrommel auszuführen. Die bei Betätigung bekannter Trommelbremsen infolge solcher Bewegungen gelegentlich auftretenden Anschlaggeräusche lassen sich durch die beschriebenen Maßnahmen bei der erfindungsgemäßen Bremse vermeiden.

Vorteilhafte Weiterbildungen ergeben sich aus den Unteransprüchen.

Ausführungsbeispiele der Erfindung werden im folgenden anhand schematischer Zeichnungen mit weiteren Einzelheiten erläutert. Es zeigen:
Fig. 1 eine Gesamtansicht einer erfindungsgemäßen Trommelbremse und
Fig. 2 den Teilschnitt II-II in Fig. 1.

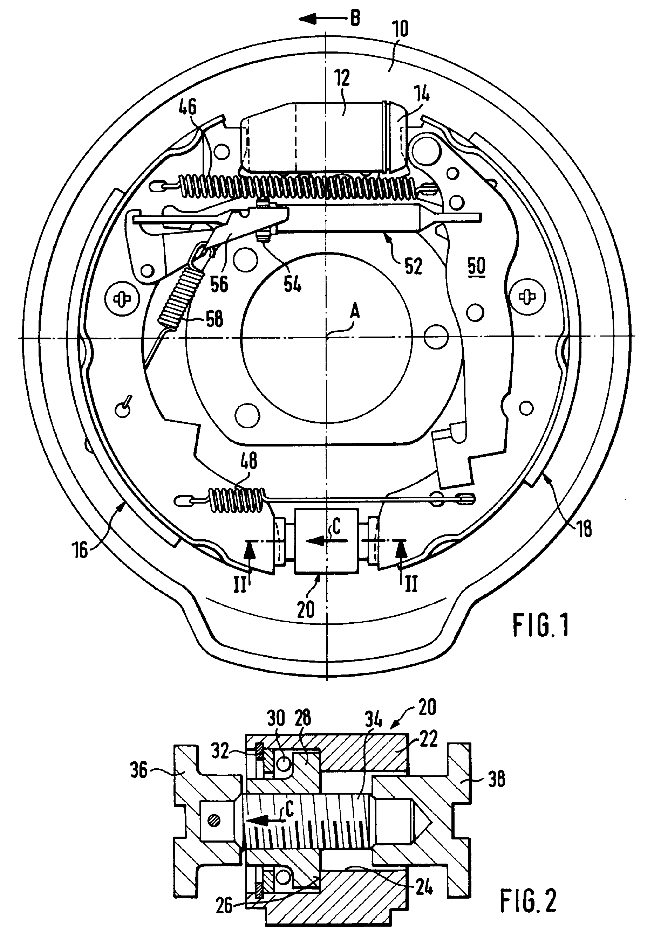

Die Bremse ist einer nicht dargestellten Bremstrommel zugeordnet, deren Achse mit A und deren Betriebsdrehrichtung mit dem Pfeil B bezeichnet ist. Tragendes Bauteil der Bremse ist eine im wesentlichen kreisförmige Ankerplatte 10; an dieser ist in einem randnahen Bereich ein Radbremszylinder 12 starr befestigt, dessen in Fig. 1 linkes Ende geschlossen ist und aus dessen rechtem Ende ein Kolben 14 herausragt. An der Ankerplatte 10 sind ein in Fig. 1 links angeordneter erster Bremsbacken 16 und ein rechts angeordneter zweiter Bremsbacken 18 geführt. Der erste Bremsbacken 16 stützt sich mit seinem in Fig. 1 oberen Ende am geschlossenen Ende des Radbremszylinders 12 ab; der zweite Bremsbacken 18 stützt sich mit seinem oberen Ende am Kolben 14 ab.

Zwischen den unteren Enden der beiden Bremsbacken 16 und 18 ist eine Zwischenstütze 20 angeordnet. Diese hat ein zylinderartiges Gehäuse 22, das dem Radbremszylinder 12 diametral gegenüberliegt und ebenfalls an der Ankerplatte 12 starr befestigt ist. Im Gehäuse 22 ist eine Führung 24 ausgebildet, die sich parallel zum Radbremszylinder 12 und im rechten Winkel zu der in Fig. 1 senkrechten Mittellinie der Bremse erstreckt. Die Führung 24 ist eine Stufenbohrung; deren Stufe bildet einen ringförmigen Anschlag 26, an der ein Nachstellglied 28 normalerweise anliegt. Das Nachstellglied 28 ist beim dargestellten Ausführungsbeispiel eine Mutter und ist zwischen dem Anschlag 26 und einem Axiallager 30 angeordnet, das sich über einen Stützring 32 im Gehäuse 22 abstützt.

Der Stützring 32 ist ein federnder Sicherungsring, der in eine Innennut des Gehäuses 22 eingerastet ist. Das Nachstellglied 28 hat im Gehäuse 22 ein begrenztes axiales Spiel und ist leicht drehbar, wenn es vom Anschlag 26 in Richtung zum Axiallager 30 bewegt worden ist oder an diesem anliegt.

Durch das Nachstellglied 28 erstreckt sich in axialer Richtung der Führung 24 ein Stößel 34 hindurch, der ein steiles Außengewinde von asymmetrischem Profil aufweist und mit einem komplementären Innengewinde des Nachstellgliedes 28 in Eingriff steht. Die so gebildete Gewindepaarung ist in Richtung des Pfeils C selbsthemmungsfrei, in entgegengesetzter Richtung hingegen selbsthemmend.

Bei dem gezeichneten Ausführungsbeispiel ist das Gehäuse 22 an beiden Enden offen, und der Stößel 34 trägt an sei nen beiden Enden je einen Steckfuß 36 bzw. 38, an dem sich das in Fig. 1 untere Ende des Bremsbackens 16 bzw. 18 derart abstützt, daß der Stößel 34 sich nicht drehen kann.

Die beiden Bremsbacken 16 und 18 sind in üblicher Weise durch ein Paar Rückstellfedern 46 und 48 miteinander verbunden.

An dem in Fig. 1 oberen, dem Kolben 14 des Radbremszylinders 12 zugeordneten Ende des Bremsbackens 18 ist in ebenfalls üblicher Weise ein mechanischer Betätigungshebel 50 schwenkbar gelagert, der durch eine Strebe 52 mit dem Bremsbacken 16 verbunden ist. Die Strebe 52 weist zwei teleskopartig auseinanderschiebbare Strebenteile auf, von denen eines sich an einer Mutter 54 abstützt, die mit dem anderen Strebenteil verschraubt ist. Die Mutter 54 hat eine äußere Ratschenverzahnung; in diese greift ein Ende einer abgewinkelten Klinke 56 ein, die im Bereich ihres Scheitels am Bremsbacken 16 gelagert ist und durch eine Feder 58 derart vorgespannt ist, daß sie mit ihrem anderen Ende gegen das benachbarte Ende der Strebe 52 drückt.

Die Bauteile 50 bis 58 sind in üblicher, nicht näher erläuterungsbedürftiger Weise für mechanische Feststellbremsungen vorgesehen und bilden eine selbsttätige Nachstellvorrichtung, die bei hydraulischen Betriebsbremsungen eine Verlängerung der Strebe 52 bewirkt, wenn das Bremslüftspiel durch Belagverschleiß der Bremsbacken 16 und 18 ein vorgegebenes Maß überschritten hat.

Die dargestellte Bremse arbeitet folgendermaßen:
Bei hydraulischer Betätigung in Vorwärtsfahrt übt der zweite Bremsbacken 18 über den Stößel 34 eine Kraft C auf den ersten Bremsbacken 16 aus, der dadurch an die Bremstrommel angelegt wird, ohne daß sich sein in Fig. 1 oberes Ende von seiner Abstützung am Radbremszylinder 12 entfernt. Die Kraft C ist wegen der Umfangskraft, die von der Bremstrommel auf den zweiten Bremsbacken 18 einwirkt, kleiner als die vom Kolben 14 auf den zweiten Bremsbacken 18 ausgeübte Betätigungskraft. Die Kraft, mit der sich der Bremsbacken 16 am geschlossenen, in Fig. 1 linken Ende des Radbremszylinders 12 abstützt, ist wegen der Umfangskraft, die von der Bremstrommel auf den ersten Bremsbacken 16 einwirkt, kleiner als die Kraft C. Beide Bremsbacken 16 und 18 sind bei hydraulischer Betätigung Ablaufbacken; die Kennlinie der Bremse ist degressiv.

Das Nachstellglied 28 hat zwischen dem Anschlag 26 und dem Axiallager 30 ein vorgegebenes Spiel; außerdem besteht zwischen den Gewinden des Nachstellgliedes 28 und des Stößels 34 ein Spiel. Bei hydraulischer Betätigung wird die Summe dieser Spiele dann überschritten, wenn das Bremslüftspiel des ersten Bremsbackens 16 infolge Abnutzung seines Reibbelags einen vorgegebenen Wert überschritten hat. In diesem Fall bewirkt die Kraft C, daß der Stößel 34 ein Stückweit durch das Nachstellglied 28 hindurchgeschraubt wird, wobei der Stößel 34 durch den an ihm befestigten und mit dem ersten Bremsbacken 16 zusammenwirkenden Steckfuß 36 am Drehen gehindert ist, während das Nachstellglied 28 sich dreht. Nach der hydraulischen Bremsbetätigung kann der Stößel 34 somit nicht in seine Ausgangsstellung zurückkehren, sondern nimmt eine neue Stellung ein, in der er gemäß Fig. 1 und 2 entsprechend der Nachstellung nach links versetzt ist.

Bei mechanischer Betätigung der dargestellten Bremse wirkt der erste Bremsbacken 16 als Auflaufbacken, denn er stützt sich über den Steckfuß 36 am Stößel 34 ab, der durch seine in Richtung nach rechts selbsthemmende Gewindeverbindung mit dem am Anschlag 26 anliegenden Nachstellglied 28 daran gehindert ist, sich nach rechts zu bewegen. Der zweite Bremsbacken 18 wirkt hingegen als Ablaufbacken. Insgesamt ist die Kennlinie der Bremse bei mechanischer Betätigung leicht progressiv.

## Patentansprüche

1. Hydraulisch und mechanisch betätigbare Trommelbremse, insbes. für Hinterräder eines Kraftfahrzeugs, mit
- einem hydraulischen Radbremszylinder (12), der an einer Ankerplatte (10) befestigt ist und einen Kolben (14) enthält,
- einem ersten Bremsbacken (16), der sich mit einem Ende am Radbremszylinder (12) abstützt,
- einem zweiten Bremsbacken (18), der sich mit einem Ende am Kolben (14) abstützt,
- einer Zwischenstütze (20), an der sich beide Bremsbacken (16, 18) mit ihren vom Radbremszylinder (12) entfernten Enden abstützen, und
- einer mechanischen Betätigungsvorrichtung (50-58), mit der die Bremsbacken (16, 18) in der Nähe des Radbremszylinders (12) auseinanderspreizbar sind,
- wobei der Radbremszylinder (12) und die Zwischenstütze (20) so angeordnet sind, daß bei hydraulischer Betätigung der Bremse in Vorwärtsfahrt beide Bremsbacken (16, 18) Ablaufbacken sind,
**dadurch gekennzeichnet,** daß
- die Zwischenstütze (20) ein Gehäuse (22) aufweist, das an der Ankerplatte (10) befestigt ist und eine zum Radbremszylinder (12) mindestens annähernd parallele Führung (24) und einen Anschlag (26) aufweist,
- in der Führung (24) ein Nachstellglied (28) begrenzt axial verschiebbar ist und
- der erste Bremsbacken (16) an einem Ende eines Stößels (34) abgestützt ist, der bei hydraulischer Betätigung der Bremse durch eine auf sein zweites Ende einwirkende Kraft (C) in Richtung zum ersten Bremsbacken (16) verschiebbar ist und in einer bezüglich dieser Kraft (C) selbsthemmungsfreien, in entgegengesetzter Richtung jedoch selbsthemmenden Verbindung mit dem Nachstellglied (28) steht.

2. Trommelbremse nach Anspruch 1,
dadurch **gekennzeichnet,** daß der Stößel (34) sich durch das Gehäuse (22) hindurcherstreckt und mit seinem zweiten Ende den zweiten Bremsbacken (18) abstützt.

3. Trommelbremse nach Anspruch 1 oder 2,
dadurch **gekennzeichnet,** daß die Verbindung zwischen Nachstellglied (28) und Stößel (34) eine Gewindeverbindung ist und das Nachstellglied (28) verschiebbar ist zwischen einer Stellung, in der es am Anschlag (26) anliegt, und einer Stellung, in der es frei drehbar ist.

4. Trommelbremse nach einem der Ansprüche 1 bis 3,
dadurch **gekennzeichnet,** daß die mechanische Betätigungsvorrichtung (50-58) gebildet ist von
- einem mechanischen Betätigungshebel (50), der nahe dem Radbremszylinder (12) an einem der beiden Bremsbacken (18) schwenkbar gelagert ist, und
- einer Strebe (52), die sich nahe dem Radbremszylinder (12) und mindestens annähernd parallel zu ihm zwischen dem Betätigungshebel (50) und dem anderen der beiden Bremsbacken (16) erstreckt.

5. Trommelbremse nach Anspruch 4,
dadurch **gekennzeichnet,** daß die Strebe (52) in ihrer Länge selbsttätig nachstellbar ist.

## Claims

1. Hydraulically and mechanically actuable drum brake, in particular for rear wheels of a motor vehicle, comprising
- a hydraulic wheel brake cylinder (12) which is secured to an anchor plate (10) and includes a piston (14),
- a first brake shoe (16) which bears with one end on the wheel brake cylinder (12),
- a second brake shoe (18} which bears with one end on the piston (14),
- an intermediate support (20) on which both brake shoes (16, 18) bear with their ends remote from the wheel brake cylinder (12), and
- a mechanical actuating means (50-58) with which the brake shoes (16, 18) can be moved apart in the vicinity of the wheel brake cylinder (12),
- the wheel brake cylinder (12) and the intermediate support being so arranged that on hydraulic actuation of the brake during forward travel both brake shoes (16, 18)are secondary shoes.
characterized in that
- the intermediate support (20) comprises a housing (22) which is secured to the anchor plate (10) and has a guide (24) at least approximately parallel to the wheel brake cylinder (12) and a stop (26),
- in the guide (24) an adjusting member (28) is axially displaceable to a limited extent and
- the first brake shoe (16) is supported at one end of a push member (34) which on hydraulic actuation of the brake is displaceable by a force (C) acting on its second end in the direction towards the first brake shoe (16) and is connected to the adjusting member (28) in a manner free of self-locking with respect to said force (C) but self-locking in the opposite direction.

2. Drum brake according to claim 1,
characterized in that the push member (34) extends through the housing (22) and with its second end bears on the second brake shoe (18).

3. Drum brake according to claim 1 or 2,
characterized in that the connection between the adjusting member (28) and push member (34) is a threaded connection and the adjusting member (28) is displaceable between a position in which it bears on the stop (26) and a position in which it is freely rotatable.

4. Drum brake according to any one of claims 1 to 3,
characterized in that the mechanical actuating means (50-58) is formed by
- a mechanical actuating lever (50) which is pistovotally mounted near the wheel brake cylinder (12) on one of the two brake shoes (18), and
a strut (52) which extends near the wheel brake cylinder (12) and at least approximately parallel thereto between the actuating lever (50) and the other of the two brake shoes (16).

5. Drum brake according to claim 4, characterized in that the strut (52) is automatically adjustable in its length.

## Revendications

1. Frein à tambour pouvant être actionné hydrauliquement et mécaniquement, notamment pour les roues arrière d'un véhicule automobile, comportant :
- un cylindre hydraulique (12) de frein de roue, qui est fixé sur un plateau-support (10) et qui contient un piston (14),
- une première mâchoire de frein (16), qui s'appuie par une extrémité contre le cylindre (12) de frein de roue,
- une seconde mâchoire de frein (18), qui s'appuie par une extrémité contre le piston (14),
- un appui intermédiaire (20), contre lequel s'appuient les deux mâchoires de frein (16, 18) par leurs extrémités éloignées du cylindre de frein de roue (12), et
- un dispositif mécanique d'actionnement (50-58), au moyen duquel les mâchoires de frein (16, 18) peuvent être écartées l'une de l'autre à proximité du cylindre de frein de roue (12),
- le cylindre (12) de frein de roue et l'appui intermédiaire (20) étant disposés de telle sorte que, lors d'un actionnement hydraulique du frein en marche avant, les deux mâchoires de frein (16, 18) constituent des mâchoires à effet dégressif.
caractérisé en ce que :
- l'appui intermédiaire (20) comporte un carter (22) qui est fixé sur le plateau-support (10) et qui est pourvu d'un guide (24), au moins approximativement parallèle au cylindre (12) de frein de roue, et d'une butée (26),
- dans le guide (24), un organe correctif (28) peut effectuer une translation axiale limitée, et
- la première mâchoire de frein (16) s'appuie contre une extrémité d'un poussoir (34) qui, lors d'un actionnement hydraulique du frein, est déplaçable en translation dans un sens allant vers la première mâchoire de frein (16) par une force (C) agissant sur sa seconde extrémité, et qui est relié à l'organe correctif (28) par une liaison exempte d'autoblocage par rapport à cette force (C) mais qui est cependant à autoblocage dans le sens opposé.

2. Frein à tambour selon la revendication 1, caractérisé en ce que le poussoir (34) s'étend à travers le carter (22) et soutient par sa seconde extrémité la seconde mâchoire de frein (18).

3. Frein à tambour selon la revendication 1 ou 2, caractérisé en ce que la liaison entre l'organe correctif (28) et le poussoir (34) est une liaison par filetages et l'organe correctif (28) est déplaçable entre une position dans laquelle il s'appuie contre la butée (26) et une position dans laquelle il peut tourner librement.

4. Frein à tambour selon une des revendications 1 à 3, caractérisé en ce que le dispositif mécanique d'actionnement (50-58) est constitué par :
- un levier mécanique d'actionnement (50), qui est monté à proximité du cylindre (12) de frein de roue de façon à pouvoir pivoter sur une des deux mâchoires de frein (18), et
- une tige (52), qui est située à proximité du cylindre (12) de frein de roue et gui s'étend au moins approximativement parallèlement à celui-ci entre le levier d'actionnement (50) et l'autre des deux mâchoires de frein (16).

5. Frein à tambour selon la revendication 4, caractérisé en ce que la tige (52) est automatiquement réglable en longueur.
